# EUROPÄISCHE PATENTSCHRIFT

(11) **EP 1 422 097 B1**
(45) Veröffentlichungstag und Bekanntmachung des Hinweises auf die Patenterteilung: **12.08.2009**
(21) Anmeldenummer: 03018288.5
(22) Anmeldetag: 12.08.2003
(51) Int. Cl.: B60J 7/10, B60J 7/14, B60J 7/08, B60J 7/185

(54) **Abnehmbares Dach für ein Kraftfahrzeug**
Removable roof fo a vehicle
Toit amovible pour un véhicule

(30) Priorität: 20.11.2002 DE 10254131
(43) Veröffentlichungstag der Anmeldung: 26.05.2004
(73) Patentinhaber: Dr. Ing. h.c. F. Porsche Aktiengesellschaft, 70435 Stuttgart (DE)
(72) Erfinder: Schlachter, Reimund, 75417 Mühlacker (DE); Scholz, Andre, 75446 Wiernsheim (DE)

(56) Entgegenhaltungen:
- DE-A- 1 630 940
- GB-A- 2 304 647
- US-A- 3 494 659
- US-A- 5 110 178
- US-A- 5 501 052
- PATENT ABSTRACTS OF JAPAN vol. 015, no. 333 (M-1150), 23. August 1991 (1991-08-23) -& JP 03 128725 A (HONDA MOTOR CO LTD), 31. Mai 1991 (1991-05-31)
- PATENT ABSTRACTS OF JAPAN vol. 017, no. 472 (M-1470), 27. August 1993 (1993-08-27) -& JP 05 112135 A (SUZUKI MOTOR CORP), 7. Mai 1993 (1993-05-07)

## Beschreibung

Die Erfindung bezieht sich auf ein abnehmbares Dach für ein Kraftfahrzeug, insbesondere einen Personenkraftwagen, nach dem Oberbegriff des Patentanspruchs 1.

Aus der JP-A-03-128725 ist ein abnehmbares Dach der gattungsgemäßen Art für ein Kraftfahrzeug bekannt. Dabei weist das Kraftfahrzeug eine Öffnung auf, die zwischen einem Windschutzscheibenrahmen und einer sich hinter den Fahrgastsitzen erstreckenden Aufbaurahmenstruktur erstreckt. Das abnehmbare Dach dient zum Abdecken dieser Öffnung. Es besteht aus formsteifem Werkstoff und ist zweigeteilt, so dass ein erstes und zweites Dachelement vorgesehen sind. Die Dachelemente weisen untereinander ein formschlüssig wirkendes Fixierungssystem auf, welches eine erste und zweite Fixierungseinrichtung umfasst, von denen jeweils eine benachbart zur Aufbaurahmenstruktur und zum Windschutzscheibenrahmen angeordnet ist. Ferner weist das abnehmbare Dach ein Verriegelungssystem mit einer Verriegelungseinrichtung auf, die sich entlang der Fahrzeuglängsrichtung an dem einen Dachelement erstreckt und sowohl am Windschutzscheibenrahmen als auch an der Aufbaurahmenstruktur verriegelnd angreift. Darüber hinaus durchsetzt die Verriegelungseinrichtung auch noch die Fixierungseinrichtungen.

Ein bekanntes manuell montier- bzw. demontierbares Dach für einen Personenkraftwagen, DE 41 37 344 A1, verläuft zwischen einem oberen Trägerteil eines Windschutzscheibenrahmens und einer sich hinter Lehnen von Fahrzeugsitzen erstreckenden Aufbaurahmenstruktur. Die Aufbaurahmenstruktur umfasst eine Rollbügelvorrichtung, die einen Fahrgastraum des Personenkraftwagens quer zur Fahrzeuglängsrichtung überspannt. Das Dach besteht aus einem formsteifen Werkstoff und ist als ein einteiliges Bauteil ausgeführt, wobei das Dach unter Zwischenschaltung eines Fixierungssystems und eines Verriegelungssystems am Trägerteil des Windschutzscheibenrahmens bzw. an der Aufbaustruktur in Lage gehalten wird.

Aus der GB 1,162,627 geht ein abnehmbares Dach eines Personenkraftwagens hervor, das gelenkige Seitenträger aufweist. Durch diese Seitenträger kann das Dach in eine zusammengelegte bzw. in eine gestreckte Position verbracht werden, in welcher gestreckten Position das Dach mit entsprechenden Stützkörpern mit jeweils einer etwa U-förmige Rinne an einem Windschutzscheibenrahmen bzw. an einem Rollbügel in Eingriff steht.

In der DE 1 580 535 wird ein Verdeck für Kraftfahrzeuge behandelt, das an einem Windschutzscheibenrahmen und einem einen Fahrgastraum überspannenden Rollbügel lösbar befestigt ist. Dabei wirkt das Dach am Windschutzscheibenrahmen mittels eines unnachgiebigen Verriegelungssystems und am Rollbügel mittels eines elastischen Fixierungssystems zusammen.

Darüber hinaus befasst sich die US 4,582,358 mit einem Aufbau für Personenkraftwagen, bei dem zwischen einem Windschutzscheibenrahmen und einer hinteren Aufbaustruktur ein Verbindungsträger vorgesehen ist, der sich in einer Mittellängsebene des Personenkraftwagens erstreckt und Dachöffnungen begrenzt. In die Dachöffnungen sind lösbare Dachelemente einsetzbar, die unabhängig und getrennt voneinander auf dem Verbindungsträger ruhen.

Aufgabe der Erfindung ist es, ein abnehmbares Dach für einen Personenkraftwagen zu schaffen, das mittels eines Fixierungssystems und eines Verriegelungssystems sicher an einem Windschutzscheibenrahmen und einer hinter Fahrzeugsitzen sich erstreckenden Aufbaurahmenstruktur gehalten ist. Dabei sollte aber auch gewährleistet sein, dass die Handhabung des Dachs zur Montage und Demontage einfach ist und sich das Fixierungssystem und das Verriegelungssystems durch gute Funktion und leicht realisierbare Bauteile auszeichnen.

Erfindungsgemäß wird diese Aufgabe durch ein abnehmbares Dach mit den Merkmalen des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Dachelemente in Verbindung mit der ersten Fixierungseinrichtung und der zweiten Fixierungseinrichtung sowie der Verriegelungseinrichtung den auftretenden Belastungen, die sich durch die gegebene Konstruktion von Windschutzscheibenrahmen und der bspw. eine Rollbügelvorrichtung darstellenden hinteren Aufbaurahmenstruktur ergeben, gut standhalten. Durch diese Ausbildung sind auch die manuellen Montagemaßnahmen, um die Dachelemente am Personenkraftwagen zu befestigen und von letzterem zu lösen, z.B. von einer einzigen Personen rasch und mühefrei zu bewältigen. Die Bauteile der ersten und zweiten Fixierungseinrichtung lassen sich mit vertretbarem Aufwand umsetzen und an den Dachelementen bzw. Windschutzscheibenrahmen unterbringen; sinngemäß gilt dies auch für die Verriegelungseinrichtung, die jeweils zwischen den Dachelementen und der hinteren Aufbaustruktur wirksam ist.

In der Zeichnung wird ein Ausführungsbeispiel der Erfindung gezeigt, das nachstehend näher erläutert wird.

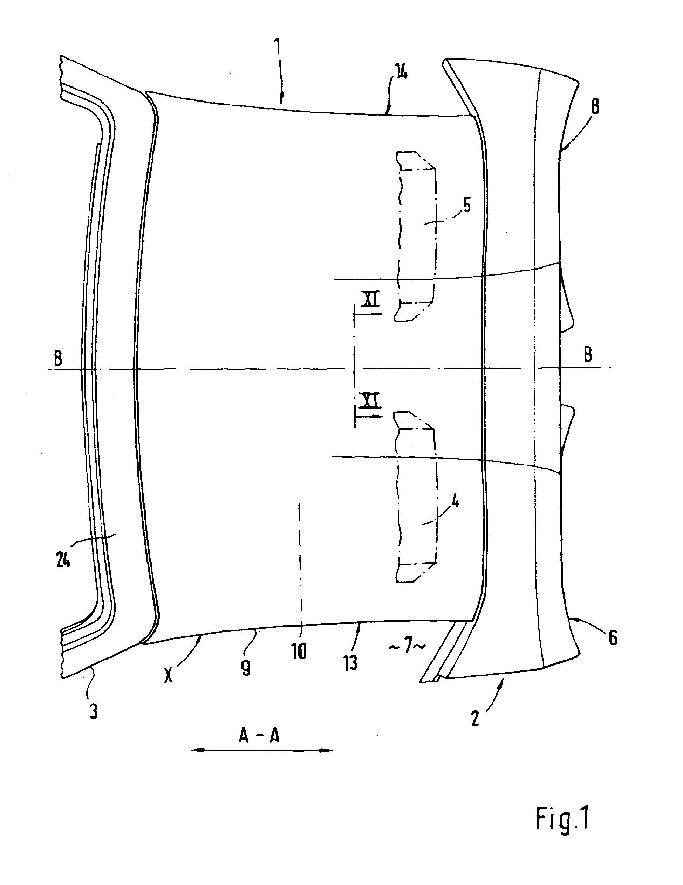

Es zeigen
- Fig. 1: eine Teilansicht eines Personenkraftwagens von oben mit einem abnehmbaren Dach,

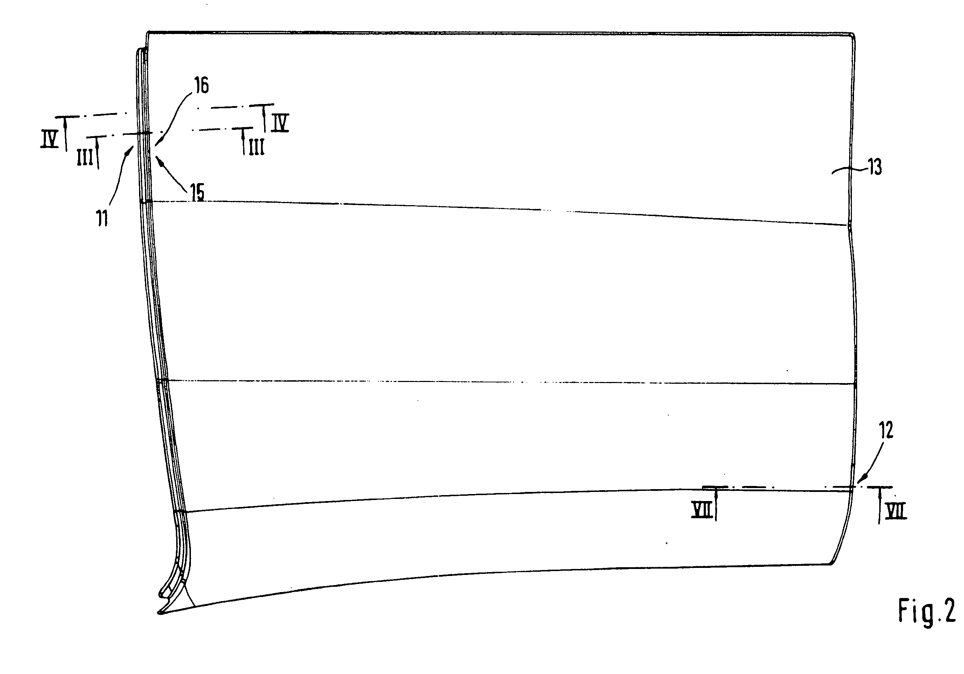

- Fig. 2: eine Einzelheit X der Fig. 1 in größerem Maßstab,
- Fig. 3: einen Schnitt nach der Linie III-III der Fig. 2 in größerem Maßstab,
- Fig. 4: einen Schnitt nach der Linie IV-IV der Fig. 2 in größerem Maßstab,
- Fig. 5: eine Schnitt nach der Linie V-V der Fig. 4,
- Fig. 6: eine Schrägansicht von hinten auf ein Dachelement gemäß Fig. 1, jedoch um 180° gedreht,
- Fig. 7: einen Schnitt nach der Linie VII-VII der Fig. 2,
- Fig. 8: einen Schnitt nach der Linie VIII-VIII der Fig. 7,
- Fig. 9: eine Einzelheit Y der Fig. 7,
- Fig.10: eine Einzelheit Z der Fig. 8,
- Fig.11: einen Schnitt nach der Linie XI-XI der Fig.1 in größerem Maßstab, und
- Fig.12: eine Teilseitenansicht des Personenkraftwagens nach Fig. 1.

Ein Personenkraftwagen 1 umfasst einen offenen Aufbau 2 mit einem Windschutzscheibenrahmen 3 und einer sich hinter Fahrgastsitzen 4,5 erstreckenden hinteren Aufbaurahmenstruktur 6, die eine einen Fahrgastraum 7 überspannende Rollbügelvorrichtung 8 umfasst. Der Bereich zwischen Windschutzscheibenrahmen 3 und Rollbügelvorrichtung 8 ist frei von in Fahrzeuglängsrichtung A - A verlaufenden den Aufbau 2 verstärkenden Trägerstrukturen. Dies bedeutet, dass sämtliche auf den Aufbau 2 einwirkende Biege- und Torsionsmomente von einer nicht gezeigten Bodenanlage mit ihren Trägern aufgenommen werden, so dass etwa im Fahrbetrieb des Personenkraftwagens auftretenden Relativbewegungen zwischen Windschutzscheibenrahmen 3 und Rollbügelvorrichtung 8 bei der Verbindung eines formsteifen abnehmbaren Dachs 9 mit den zuletzt genannten durch konstruktive Maßnahmen Rechnung getragen ist.

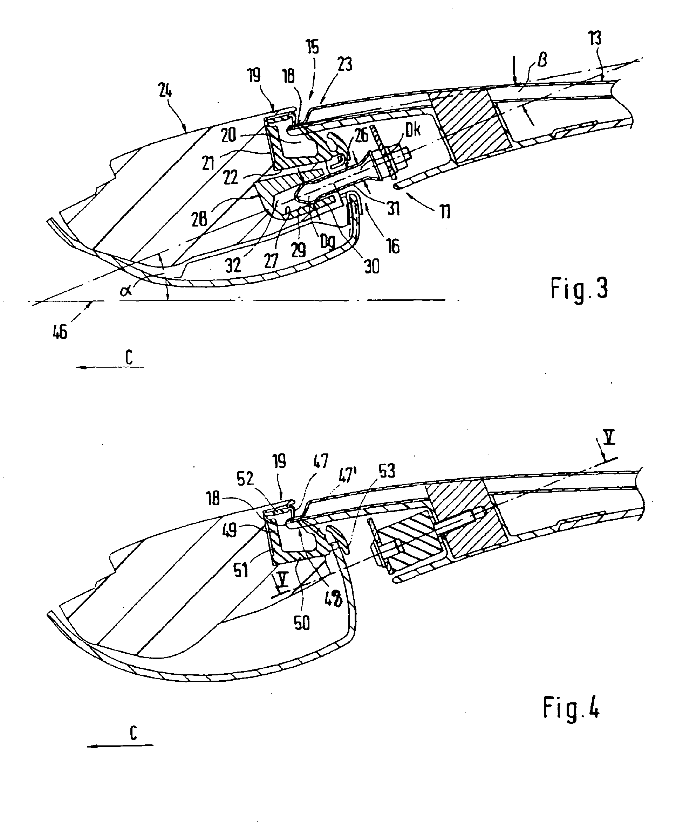

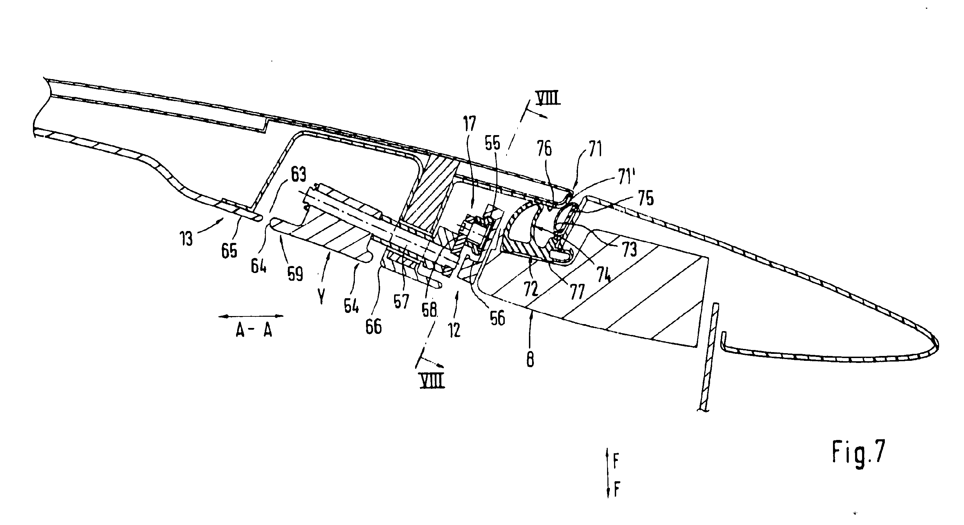

Das Dach 9 besteht aus festem Kunststoff z.B. hochbelastbarer Gattung, insbesondere faserverstärktem Kunststoff - CFK -, deckt eine Öffnung 10 zwischen dem Windschutzscheibenrahmen 3 und der Rollbügelvorrichtung 8 bzw. hinteren Aufbaurahmenstruktur 6 ab, und es ist mit dem Aufbau 2 unter Zwischenschaltung eines formschlüssig wirkenden Fixierungssystems 11 - Fig. 3 - und eines Verriegelungssystems 12 - Fig. 7 - verbunden. Darüber hinaus umfasst das Dach 9 zwei in einer Mittellängsebene B-B ohne Verbindungselemente, also scharnierlos zusammengesetzte Dachelemente 13, 14. Jedes Dachelement z. B. 13 wirkt mit einer ersten Fixierungseinrichtung 15 und einer zweiten Fixierungseinrichtung 16 des Fixierungssystems 11 mit dem Windschutzscheibenrahmen 3 und einer Verriegelungseinrichtung 17 des Verriegelungssystems 12 mit der Rollbügelvorrichtung 8 zusammen.

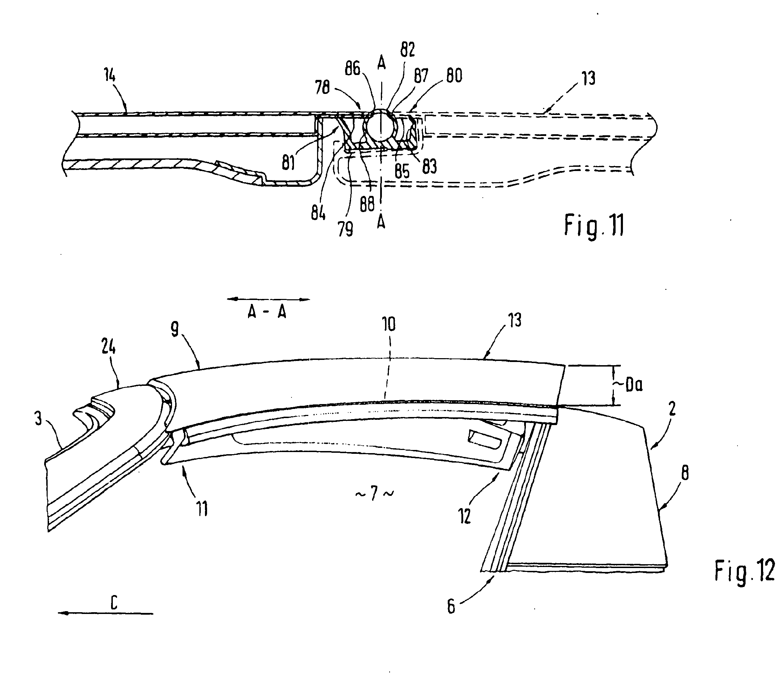

Das Dachelement 13 und das Dachelement 14 können in einem nicht dargestellten Stauraum des Personenkraftwagens 1 in gestapelter Form untergebracht werden; der Personenkraftwagen ist im offenen Zustand. Zur Montage des Dachelements 13 wird es durch eine in Fahrtrichtung C gerichtet Bewegung in Eingriff mit den Fixierungseinrichtungen 15 und 16 gebracht. Dabei ist das Dachelement 13 gegenüber der Rollbügelvorrichtung 8 etwas d.h. mit dem Maß Da angehoben - Fig. 12 -. Nach definiertem Absenken des Dachelements 13 nimmt es seine Konstruktionslage ein, und die Verriegelungseinrichtung 17 ist wirksam; die Demontage des Dachelements 13 folgt in umgekehrter Reihenfolge; für das Aufsetzen bzw. Lösen des anderen Dachelements 14 sind vergleichbare Montageschritte erforderlich.

Die erste Fixierungseinrichtung 15 ist nach den Fig. 3 und 4, die Längsschnitte wiedergeben, mit einer sich in Fahrzeuglängsrichtung A-A erstreckenden flanschartigen vorderen Dachverlängerung 18 des Dachelements 13 versehen, die eine Außenschenkelwand 19 einer zum Dachelement 13 hin gerichteten offen U-förmigen Aufnahme 20 untergreift. Die Aufnahme 20 umfasst auch noch eine Stegwand 21 sowie eine Innenschenkelwand 22, und sie ist Bestandteil eines oberen Querträgers 24 des Windschutzscheibenrahmens 3. Die Dachverlängerung 18 ist gegenüber einer bündig zur Außenschenkelwand 19 verlaufenden Außenwand 23 des Dachelements 13 mit einem Absatz 25 ausgeführt.

Die zweite Fixierungseinrichtung 16 weist einen Lagerzapfen 26 auf, der in eine Aufnahmebohrung 27 hineinragt, welcher Lagerzapfen 26 am Dachelement 13 und welche Aufnahmebohrung 27 am Querträger 24 des Windschutzscheibenrahmens 3 vorgesehen sind. Die Aufnahmebohrung 27 ist in einen metallischen Einsatz 28 eingearbeitet, der in den z.B. aus faserverstärktem Kunststoff bestehenden Windschutzscheibenrahmen 3 bzw. Querträger 24 in der Weise integriert ist, dass besagter Einsatz 28 in den Querträger 24 eingebettet ist. Der Lagerzapfen 26 weist benachbart seinem freien Ende 29 eine Führungsanformung 30 mit einem größten Durchmesser Dg auf, von der aus der Durchmesser Dg einerseits in einen Schaft 31 mit einem kleineren Durchmesser Dk übergeht und andererseits als konische Spitze 32 ausläuft.

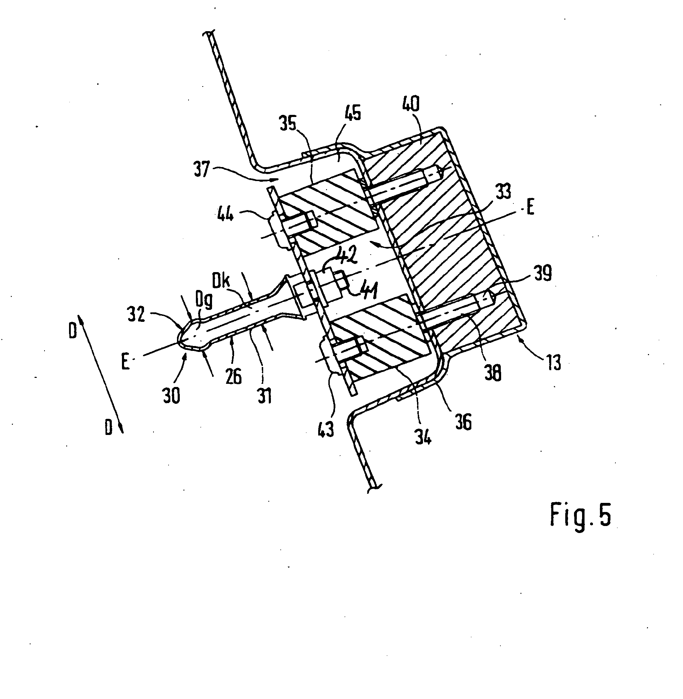

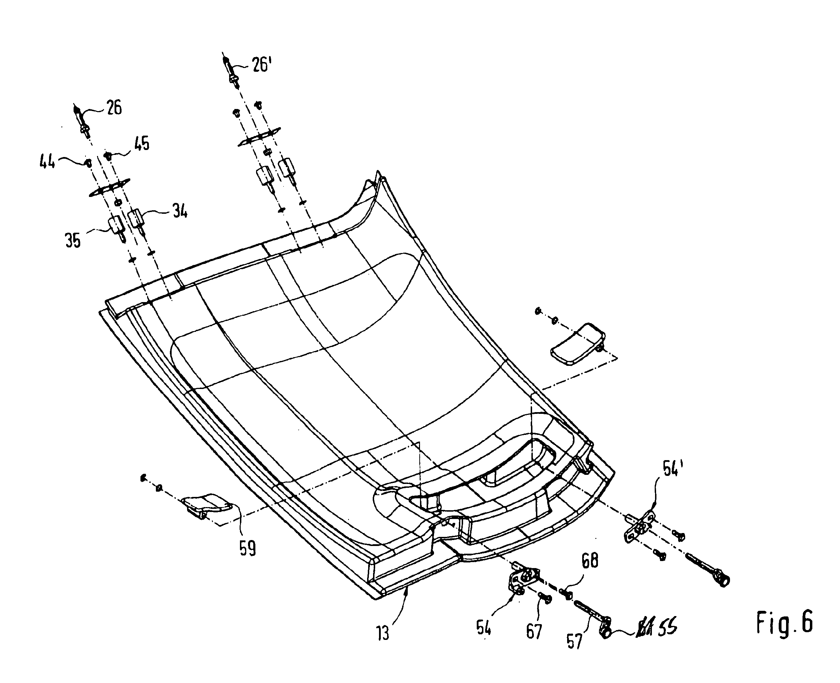

In den Fig. 4 und 5 ist dargestellt, dass der Lagerzapfen 26 unter Vermittlung einer elastischen Einrichtung 33 am Dachelement 13, die mit zwei in Fahrzeugquerrichtung D-D beabstandete Elastikkörper 34 und 35, vorzugsweise mit kreiszylindrischem Querschnitt, versehen ist, die zum einen an einem Querträger 36 des Dachelements 13 gehalten und zum anderen mit einem plattenartigen Halteträger 37 für den Lagerzapfen 26 verbunden sind. Jeder Elastikkörper z.B. 34 ruht mittels eines Gewindezapfens 38 in einer Gewindebohrung 39 eines metallischen Einsatzes 40, der in den Querträger 36 des Dachelements 13 in vollem Umfang verdeckt eingearbeitet ist. Der Lagerzapfen 26 verläuft in einer Mittelängsebene E-E zwischen den Elastikkörpern 34 und 35 und wird mittels eines Gewindezapfens 41 und einer Schraubenmutter 42 am Halteträger 37 gehalten, wobei der Halteträger 37 unter Zwischenschaltung von Schrauben 43 und 44 an den Elastikkörpern 34 und 35 befestigt ist. Um die Elastikkörper 34 und 35, eventuell auch den Halteträger 37 günstig im Dachelement 13, und zwar weitgehend versenkt unterzubringen, ist letzteres mit einer Ausnehmung 45 versehen. Die Fig. 6 gibt eine Ausführung wieder, nach der je Dachelement bspw. 14 zwei Lagerzapfen nämlich 26 und 26', vorgesehen sind, die mit korrespondierenden Aufnahmebohrungen des Windschutzscheibenrahmens 3 bzw. Querträgers 24 zusammenarbeiten.

Damit eine gezielte Funktion der ersten Fixierungseinrichtung 15 und der zweiten Fixierungseinrichtung 16 sichergestellt wird, verläuft der Lagerzapfen 26 - im Längsschnitt nach Fig. 3 gesehen - im spitzen Winkel α (ca. 15° bis 25°) zu einer Horizontalen 46. Dabei erstrecken sich der Lagerzapfen 26 der zweiten Fixierungseinrichtung 15 und die vordere flanschartige Dachverlängerung 18 im spitzen Winkel β (ca. 8° bis 12°) zueinander.

Gemäß Fig. 4 sind zwischen der Außenschenkelwand 19 und der Dachverlängerung 18 ein erster Dichtabschnitt 47 und einer Innenwand 48 des Dachelements 13 sowie der Innenschenkelwand 22 der U-förmigen Aufnahme 20 ein zweiter Dichtabschnitt 47' angeordnet. Der erste Dichtabschnitt 47 und der zweite Dichtabschnitt 47' sind Bestandteil eines Dichtkörpers 49, der sich mit Anlagewänden 50,51,52 entlang der Außenschenkelwand 19, der Stegwand 21 und der Innenschenkelwand 22 der Aufnahme 20 erstreckt. Ein weiteres wesentliches Merkmal des Dichtkörpers 49 ist ein vom zweiten Dichtabschnitt 47' weggeführter Steg 53, der mit besagtem zweiten Dichtabschnitt 47' eine Art Rinne zur gezielten Ableitung von angesammeltem Wasser bildet.

Aus Fig. 7 geht hervor, dass die Verriegelungseinrichtung 17 des Verriegelungssystems 12 eine Betätigungsvorrichtung 54 mit einem Sperrzapfen 55 aufweist, der mit einer Schließkulisse 56 zusammenarbeitet, dergestalt, dass das Dachelement 13 - in Fahrzeughöhenrichtung F-F gesehen - gegen die Rollbügelvorrichtung 8 gespannt wird. Die Betätigungseinrichtung 54 ist am Dachelement 13 angebracht; die Schließkulisse 56 an der Rollbügelvorrichtung 8. Der Sperrzapfen 55 ist Teil eines mit einer in Fahrzeuglängsrichtung A-A ausgerichteten Schwenkwelle 57 verbundenen Kurbelarms 58, an dem ein Handhebel 59 angreift. Damit das Dachelement 13 bei der Montage lagerichtig zur Rollbügelvorrichtung 8 ausgerichtet ist, ist zwischen Betätigungsvorrichtung 54 und Schließkulisse 56 eine Fixierungsvorrichtung 60 wirksam, die einen aufrechten bspw. konischen Zapfen 61 und eine mit letzterem in Wirkverbindung stehende korrespondierende Aufnahmeöffnung 62 aufweist. Im abgebildeten Ausführungsbeispiel ist der Zapfen 61 an der Betätigungsvorrichtung 54 und die Aufnahmeöffnung 62 an der Schließkulisse 56 angebracht.

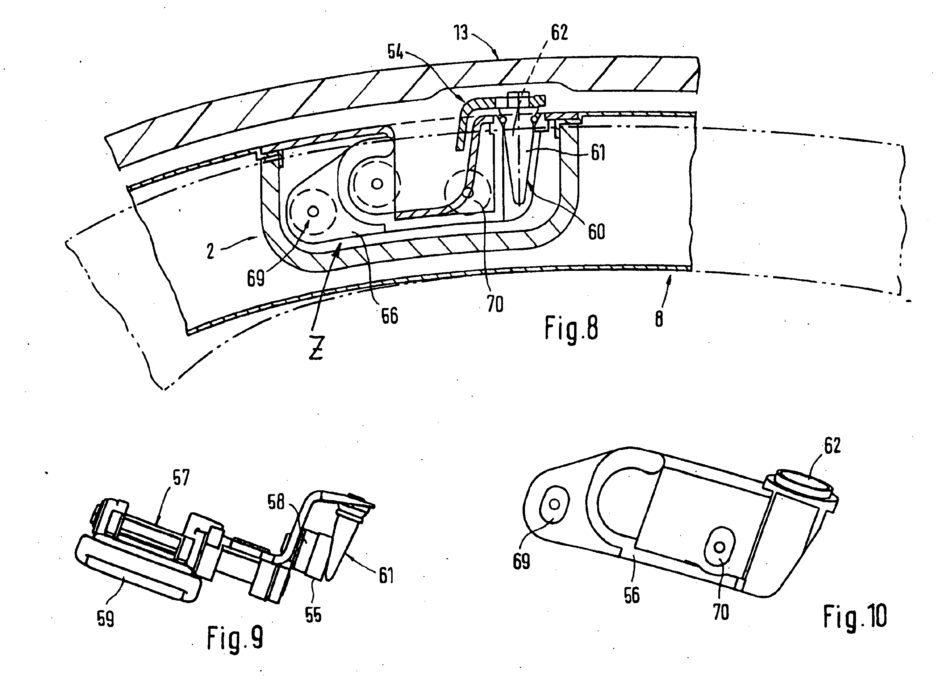

Der Handhebel 59 der Verriegelungseinrichtung 17 ist in einer Ausnehmung 63 des Dachelements 13 untergebracht. Dabei umfasst der Handhebel eine Bedienplatte 64, die oberflächenbündig zu die Ausnehmung 63 begrenzenden Innenwänden 65 und 66 des Dachelements 13 angeordnet ist. Um einen einfachen Aufbau der Verriegelungseinrichtung 17 zu erzielen, sind der Handhebel 59, die Schwenkwelle 57 und der Zapfen 61 baulich vereinigt - Fig. 9 - und unter Vermittlung von Schrauben 67,68 am Dachelement 13 befestigt - Fig. 6 -. Die bauliche Vereinigung gilt sinngemäß für die Aufnahmeöffnung 62 und die Schließkulisse 56, die jedoch mit Schrauben 69,70 an der Rollbügelvorrichtung 8 gehalten sind. Pro Dachelement 13 oder 14 können zwei mit Abstand zueinander angeordnete Betätigungsvorrichtungen 54 und 54' vorgesehen sein - Fig. 6 -, die mit den zugehörigen Schließkulissen 56 in Eingriff stehen.

Die Fig. 7 zeigt, wie das Dachelement 13 mit einer hinteren Dachverlängerung 71 eine Rinne 72 der Rollbügelvorrichtung 8 überragt und unter Vermittlung eines ersten Dichtabschnitts 73 und eines zweiten Dichtabschnitts 74 an die Rinne 72 bzw. die Rollbügelvorrichtung 8 herangeführt ist. Dabei ist der erste Dichtabschnitt 73 zwischen einem freien Ende 71' der Dachverlängerung 71 und einer aufrechten Wand 75 der Rollbügelvorrichtung 8 vorgesehen. Der zweite Dichtabschnitt 74 hingegen ist zwischen einer Innenwand 76 der Dachverlängerung 71 und einer in Richtung der zuletzt genannten ausgerichteten Wand 77 der Rinne 72 wirksam.

Wie bereits erwähnt, sind die beiden Dachelemente 13,14 entlang der Mittellängsebene B-B zusammengesetzt. Hierbei überragt das eine Dachelement nämlich 14, mit einer ersten seitlichen Dachelementverlängerung 78 eine Rinne 79 des anderen Dachelements nämlich 13 (Fig. 11). Das Dachelement 13 ist mit einer zweiten seitlichen Dachelementverlängerung 80 versehen, die ebenfalls die Rinne 79 überragt. Zur Abdichtung der Dachelemente 13,14 im Bereich der Mittellängsebene B-B sind ein erster Dichtabschnitt 81, ein zweiter Dichtabschnitt 82 und ein dritter Dichtabschnitt 83 wirksam. Der erste Dichtabschnitt 81 und der dritte Dichtabschnitt 83 sind nach Art von Dichtlippen ausgeführt, die mit Innenwänden 84 und 85 der Dachelementverlängerungen 78 und 80 zusammenwirken. Der zweite Dichtabschnitt 82 verläuft zwischen den Dachelementen 13,14 und ist als hohler Dichtkörper mit kreisförmigem Querschnitt ausgebildet, an dem sich Enden 86,87 der ersten seitlichen Dachelementverlängerung 78 und der zweiten seitlichen Dachelementverlängerung 80 etwa tangential abstützen. Schließlich sind die drei Dichtabschnitte 81, 82 und 83 Bestandteil eines aus einem Stück hergestellten Dichtkörpers 88, der in der Rinne 79 des Dachelements 13 in Lage gehalten wird.

## Patentansprüche

1. Abnehmbares Dach (9) für ein Kraftfahrzeug, insbesondere einen Personenkraftwagen, das in montierter Lage eine Öffnung (10) zwischen einem Windschutzscheibenrahmen (3) und einer hinter Fahrgastsitzen (4, 5) sich erstreckenden Aufbaurahmenstruktur(6) eines Aufbaus des Kraftfahrzeugs abdeckt, aus formsteifem Werkstoff besteht und einerseits mittels eines formschlüssig wirkenden Fixierungssystems (11) und andererseits mittels eines Verriegelungssystems (12) in montierter Lage gehalten ist, wobei das Dach (9) zwei in einer Mittellängsebene (B-B) des Kraftfahrzeugs (1) zusammensetzbare Dachelemente (13, 14) umfasst, **dadurch gekennzeichnet, dass** jedes Dachelement (13, 14) über jeweils einer ersten Fixierungseinrichtung (15) und jeweils einer zweiten Fixierungseinrichtung (16) des Fixierungssystems (11) ausschließlich mit dem Windschutzscheibenrahmen (3), und über jeweils einer Verriegelungseinrichtung (17) des Verriegelungssystems (12) ausschließlich mit der Aufbaurahmenstruktur (6) zusammenarbeitet.

2. Abnehmbares Dach nach Anspruch 1, **dadurch gekennzeichnet, dass** die erste Fixierungseinrichtung (15) eine sich in Fahrzeuglängsrichtung (A-A) erstreckende flanschartige vordere Dachverlängerung (18) des Dachelements (13, 14) des Dachs (9) aufweist, die im montierten Zustand des Daches eine Außenschenkelwand (19) einer zum Dachelement (13, 14) hin gerichteten offenen U-förmigen Aufnahme (20) eines oberen Querträgers (24) des Windschutzscheibenrahmens (3) untergreift.

3. Abnehmbares Dach nach Anspruch 1, **dadurch gekennzeichnet, dass** die zweite Fixierungseinrichtung (16) wenigstens einen Lagerzapfen (26) umfasst, der im montierten Zustand des Daches in eine Aufnahmebohrung (27) hineinragt.

4. Abnehmbares Dach nach Anspruch 3, **dadurch gekennzeichnet, dass** der Lagerzapfen (26) am Dachelement (13, 14) und die Aufnahmebohrung (27) am Windschutzscheibenrahmen (3) vorgesehen sind.

5. Abnehmbares Dach nach Anspruch 4, **dadurch gekennzeichnet, dass** der Lagerzapfen (26) benachbart seinem freien Ende (29) eine Führungsanformung (30) mit einem größten Durchmesser (Dg) aufweist, von der aus der Lagerzapfen (26) einerseits in einen Schaft (31) mit einem kleineren Durchmesser (Dk) übergeht und andererseits als konische Spitze (32) ausläuft.

6. Abnehmbares Dach nach Anspruch 3, **dadurch gekennzeichnet, dass** der Lagerzapfen (26) unter Vermittlung einer elastischen Einrichtung (30) am Dachelement (13, 14) in Lage gehalten ist.

7. Abnehmbares Dach nach Anspruch 6, **dadurch gekennzeichnet, dass** die elastische Einrichtung (33) zwei in Fahrzeugquerrichtung (D-D) beabstandete Elastikkörper (34, 35) umfasst, die einerseits an einem Querträger (36) des Dachelement (13, 14) gehalten und andererseits mit einem plattenartigen Halteträger (37) für den Lagerzapfen (26) verbunden sind.

8. Abnehmbares Dach nach Anspruch 7, **dadurch gekennzeichnet, dass** jeder Elastikkörper (34, 35) mittels eines Gewindezapfens (38) in einer Gewindebohrung (39) in einem beispielsweise metallischen Einsatz (40) des Dachelement (13, 14) ruht.

9. Abnehmbares Dach nach Anspruch 7, **dadurch gekennzeichnet, dass** der Halteträger (37) unter Vermittlung von Schrauben (43,44) mit den Elastikkörpern (34, 35) verbunden ist.

10. Abnehmbares Dach nach Anspruch 7**, dadurch gekennzeichnet, dass** der Lagerzapfen (26) in einer Mittellängsebene (E-E) zwischen den Elastikkörpern (34, 35) verläuft und unter Vermittlung eines Gewindezapfens (41) und einer Schraubenmutter (42) mit dem Halteträger (37) verbunden ist.

11. Abnehmbares Dach nach Anspruch 7, **dadurch gekennzeichnet, dass** die elastische Einrichtung (33) mit den Elastikkörpern (34 und 35) und dem Halteträger (37) in einer Ausnehmung (45) des Dachelements (13, 14) zumindest weitgehend versenkt angeordnet sind.

12. Abnehmbares Dach nach Anspruch 3, dass je Dachelement (13 oder 14) zwei Lagerzapfen (26, 26') mit Elastikkörpern (34,35; 34'35') vorgesehen sind, die mit korrespondierenden Aufnahmebohrungen (27 und 27) des Windschutzscheibenrahmens (3) zusammenarbeiten.

13. Abnehmbares Dach nach Anspruch 3, **dadurch gekennzeichnet, dass** der Lagerzapfen (26, 26') - im Längsschnitt gesehen - im spitzen Winkel (α) zu einer Horizontalen (46) verläuft.

14. Abnehmbares Dach nach Anspruch 2 und 3, dass der Lagerzapfen (26) der zweiten Fixierungseinrichtung (16) und die flanschartige Dachverlängerung (18) der ersten Fixierungseinrichtung (15) - im Längsschnitt gesehen - im spitzen Winkel (β) zueinander verlaufen.

15. Abnehmbares Dach nach Anspruch 2, **dadurch gekennzeichnet, dass** die Dachverlängerung (18) - im Längsschnitt gesehen - gegenüber einer bündig zur Außenschenkelwand (19) der Aufnahme (20) verlaufenden Außenwand (23) des Dachelements (13, 14) als Absatz ausgeführt ist.

16. Abnehmbares Dach nach Anspruch 1, **dadurch gekennzeichnet, dass** die Verriegelungseinrichtung (17) eine Betätigungsvorrichtung (54) mit einem Sperrzapfen (55) umfasst, der mit einer Schließkulisse (56) zusammenarbeitet.

17. Abnehmbares Dach nach Anspruch 16, **dadurch gekennzeichnet, dass** die Betätigungsvorrichtung (54) am Dachelement (13, 14) und die Schließkulisse (56) an einer Rollbügelvorrichtung (8) der Aufbaurahmenstruktur befestigt sind.

18. Abnehmbares Dach nach Anspruch 16, **dadurch gekennzeichnet, dass** der Sperrzapfen (55) an einem mit einer Schwenkwelle (57) verbundenen Kurbelarm (58) angebracht ist, welche Schwenkwelle (57) mit einem Handhebel (59) verbunden ist.

19. Abnehmbares Dach nach Anspruch 16, **dadurch gekennzeichnet, dass** zwischen Betätigungsvorrichtung (54) und Schließkulisse (56) eine weitere Fixierungsvorrichtung (60) wirksam ist.

20. Abnehmbares Dach nach Anspruch 19, **dadurch gekennzeichnet, dass** die weitere Fixierungsvorrichtung (60) einen aufrechten Zapfen (61) aufweist, der mit einer Aufnahmeöffnung (62) zusammenarbeitet.

21. Abnehmbares Dach nach Anspruch 20, **dadurch gekennzeichnet, dass** der Zapfen (61) an der Betätigungsvorrichtung (54) und die Aufnahmeöffnung (62) an der Schließkulisse (56) angebracht sind.

22. Abnehmbares Dach nach den Ansprüchen 17 und 18, **dadurch gekennzeichnet, dass** der Handhebel (59) in einer Ausnehmung (63) des Dachelements (13, 14) untergebracht ist.

23. Abnehmbares Dach nach Anspruch 22, **dadurch gekennzeichnet, dass** der Handhebel (59) eine Bedienplatte (64) umfasst, die oberflächenbündig zu Innenwänden (65,66) des Dachelements (13, 14) ausgerichtet ist.

24. Abnehmbares Dach nach den Ansprüchen 18 und 20, **dadurch gekennzeichnet, dass** der Handhebel (59), die Schwenkwelle (57) und der Zapfen (61) baulich vereinigt und unter Vermittlung von Schrauben (69,70) am Dachelement (13, 14) befestigt sind.

25. Abnehmbares Dach nach den Ansprüchen 1 und 17, **dadurch gekennzeichnet, dass** je Dachelement (13, 14) zwei Betätigungsvorrichtungen (54, 54') vorgesehen sind, die mit korrespondierenden Schließkulissen (56,56') an der Rollbügelvorrichtung (8) zusammenarbeiten.

26. Abnehmbares Dach nach Anspruch 1, **dadurch gekennzeichnet, das** jedes Dachelement (13, 14) mit einer hinteren Dachwandverlängerung (71) im montierten Zustand eine Rinne (72) einer Rollbügelvorrichtung (8) der Aufbaurahmenstruktur überragt und unter Vermittlung eines ersten Dichtabschnitts (73) und eines zweiten Dichtabschnitts (74) an die Rinne (72) bzw. der Rollbügelvorrichtung (8) herangeführt ist.

27. Abnehmbares Dach nach Anspruch 1, **dadurch gekennzeichnet, dass** entlang der Mittellängsebene (B-B) des Dachs (9) das eine Dachelement (14) mit einer ersten seitlichen Dachelementverlängerung (78) eine Rinne (79) des anderen Dachelements (13) überragt, das mit einer zweiten seitlichen Dachelementverlängerung (80) die Rinne (79) ebenfalls überragt, wobei zur Abdichtung der Dachelemente (13, 14) entlang der Mittellängsebene (B-B) ein erster Dichtabschnitt (81), eine zweiter Dichtabschnitt (82) und ein dritter Dichtabschnitt (83) wirksam sind.

28. Abnehmbares Dach nach Anspruch 27, **dadurch gekennzeichnet, dass** der erste Dichtabschnitt (81) und der dritte Dichtabschnitt (83) als Dichtlippen ausgeführt sind, die mit Innenwänden (84,85) der ersten seitlichen Dachelementverlängerung (78) bzw. der zweiten seitlichen Dachelementverlängerung (80) zusammenwirken.

29. Abnehmbares Dach nach Anspruch 27, **dadurch gekennzeichnet, dass** der zweite Dichtabschnitt (82) sich zwischen den Dachelementen (13, 14) erstreckt und als Dichtkörper bspw. mit kreisförmigem Querschnitt ausgebildet ist, an dem sich Enden (86 und 87) der ersten seitlichen Dachelementverlängerung (78) und der zweiten seitlichen Dachelementverlängerung (80) abstützen.

30. Abnehmbares Dach nach den Ansprüchen 27, 28 und 29, **dadurch gekennzeichnet, dass** die Dichtabschnitte (81,82,83) Bestandteil eines aus einem Stück hergestellten Dichtkörpers (88) sind, der in der Rinne (79) des anderen Dachelements (13) in Lage gehalten wird.

## Claims

1. Removable roof (9) for a motor vehicle, in particular a passenger vehicle, which, in the fitted position, covers an opening (10) between a windscreen frame (3) and a body frame structure (6), which extends behind passenger seats (4, 5), of the motor vehicle body, is composed of dimensionally stable material and is held in the fitted position firstly by means of a fixing system (11) acting in an interlocking manner and secondly by means of a locking system (12), wherein the roof (9) comprises two roof elements (13, 14) which can be assembled in a central longitudinal plane (B-B) of the motor vehicle (1), **characterized in that** each roof element (13, 14) cooperates exclusively with the windscreen frame (3) via a respective first fixing device (15) and a respective second fixing device (16) of the fixing system (11) and cooperates exclusively with the body frame structure (6) via a respective locking device (17) of the locking system (12).

2. Removable roof according to Claim 1, **characterized in that** the first fixing device (15) has a flange-like front roof extension (18) of the roof element (13, 14) of the roof (9), said roof extension extending in the longitudinal direction (A-A) of the vehicle and, in the fitted state of the roof, engaging under an outer limb wall (19) of an open U-shaped receptacle (20) of an upper cross member (24) of the windscreen frame (3), said receptacle being directed towards the roof element (13, 14).

3. Removable roof according to Claim 1, **characterized in that** the second fixing device (16) comprises at least one bearing pin (26) which, in the fitted state of the roof, projects into a receiving hole (27).

4. Removable roof according to Claim 3, **characterized in that** the bearing pin (26) is provided on the roof element (13, 14) and the receiving hole (27) is provided on the windscreen frame (3).

5. Removable roof according to Claim 4, **characterized in that** the bearing pin (26) has, adjacent to its free end (29), an integral guide formation (30) having a greatest diameter (Dg), from which the bearing pin (26) merges on one side into a shaft (31) of smaller diameter (Dk) and tapers off on the other side as a conical tip (32).

6. Removable roof according to Claim 3, **characterized in that** the bearing pin (26) is held in position with the aid of an elastic device (33) on the roof element (13, 14).

7. Removable roof according to Claim 6, **characterized in that** the elastic device (33) comprises two elastic bodies (34, 35) which are spaced apart in the transverse direction (D-D) of the vehicle, are held on one side on a cross member (36) of the roof element (13, 14) and are connected on the other side to a plate-like holding support (37) for the bearing pin (26).

8. Removable roof according to Claim 7, **characterized in that** each elastic body (34, 35) rests by means of a threaded pin (38) in a threaded hole (39) in a, for example, metallic insert (40) of the roof element (13, 14).

9. Removable roof according to Claim 7, **characterized in that** the holding support (37) is connected to the elastic bodies (34, 35) with the aid of screws (43, 44).

10. Removable roof according to Claim 7, **characterized in that** the bearing pin (26) runs in a central longitudinal plane (E-E) between the elastic bodies (34, 35) and is connected to the holding support (37) with the aid of a threaded pin (41) and a screw nut (42).

11. Removable roof according to Claim 7, **characterized in that** the elastic device (33) together with the elastic bodies (34 and 35) and the holding support (37) are at least substantially recessed in a recess (45) of the roof element (13, 14).

12. Removable roof according to Claim 3, **characterized in that** two bearing pins (26, 26') with elastic bodies (34, 35; 34', 35') are provided per roof element (13 or 14), said bearing pins cooperating with corresponding receiving holes (27 and 27) of the windscreen frame (3).

13. Removable roof according to Claim 3, **characterized in that** the bearing pin (26, 26') runs - as seen in longitudinal section - at an acute angle (α) with respect to a horizontal (46).

14. Removable roof according to Claims 2 and 3, **characterized in that** the bearing pin (26) of the second fixing device (16) and the flange-like roof extension (18) of the first fixing device (15) run - as seen in longitudinal section - at an acute angle (β) with respect to each other.

15. Removable roof according to Claim 2, **characterized in that** the roof extension (18) is designed - as seen in longitudinal section - as a step in relation to an outer wall (23) of the roof element (13, 14), which outer wall runs flush with the outer limb wall (19) of the receptacle (20).

16. Removable roof according to Claim 1, **characterized in that** the locking device (17) comprises an actuating device (54) with a blocking pin (55) which cooperates with a closing guide (56).

17. Removable roof according to Claim 16, **characterized in that** the actuating device (54) is fastened to the roof element (13, 14) and the closing guide (56) is fastened to a roll bar device (8) of the body frame structure.

18. Removable roof according to Claim 16, **characterized in that** the blocking pin (55) is provided on a crank arm (58) connected to a pivoting shaft (57), which pivoting shaft (57) is connected to a hand lever (59).

19. Removable roof according to Claim 16, **characterized in that** a further fixing device (60) is effective between the actuating device (54) and closing guide (56).

20. Removable roof according to Claim 19, **characterized in that** the further fixing device (60) has an upright pin (61) which cooperates with a receiving opening (62).

21. Removable roof according to Claim 20, **characterized in that** the pin (61) is provided on the actuating device (54) and the receiving opening (62) is provided on the closing guide (56).

22. Removable roof according to Claims 17 and 18, **characterized in that** the hand lever (59) is accommodated in a recess (63) of the roof element (13, 14).

23. Removable roof according to Claim 22, **characterized in that** the hand lever (59) comprises an operating plate (64) which is oriented flush with the surface of inner walls (65, 66) of the roof element (13, 14).

24. Removable roof according to Claims 18 and 20, **characterized in that** the hand lever (59), the pivoting shaft (57) and the pin (61) are structurally combined and fastened to the roof element (13, 14) with the aid of screws (69, 70).

25. Removable roof according to Claims 1 and 17, **characterized in that** two actuating devices (54, 54') are provided per roof element (13, 14), said actuating devices cooperating with corresponding closing guides (56, 56') on the roll bar device (8).

26. Removable roof according to Claim 1, **characterized in that**, in the fitted state, each roof element (13, 14) protrudes with a rear roof wall extension (71) over a channel (72) in a roll bar device (8) of the body frame structure and is brought near to the channel (72) or the roll bar device (8) with the aid of a first sealing section (73) and a second sealing section (74).

27. Removable roof according to Claim 1, **characterized in that**, along the central longitudinal plane (B-B) of the roof (9), the one roof element (14) protrudes with a first lateral roof element extension (78) over a channel (79) in the other roof element (13) which likewise protrudes with a second lateral roof element extension (80) over the channel (79), with a first sealing section (81), a second sealing section (82) and a third sealing section (83) being effective for sealing the roof elements (13, 14) along the central longitudinal plane (B-B).

28. Removable roof according to Claim 27, **characterized in that** the first sealing section (81) and the third sealing section (83) are designed as sealing lips which interact with inner walls (84, 85) of the first lateral roof element extension (78) and of the second lateral roof element extension (80), respectively.

29. Removable roof according to Claim 27, **characterized in that** the second sealing section (82) extends between the roof elements (13, 14) and is designed as a sealing body, for example with a circular cross section, on which ends (86 and 87) of the first lateral roof element extension (78) and of the second lateral roof element extension (80) are supported.

30. Removable roof according to Claims 27, 28 and 29, **characterized in that** the sealing sections (81, 82, 83) are part of a sealing body (88) which is made of one piece and is held in position in the channel (79) in the other roof element (13).

## Revendications

1. Toit amovible (9) pour un véhicule automobile, en particulier un véhicule de transport de personnes, qui, dans la position montée, recouvre une ouverture (10) entre un cadre de pare-brise (3) et une structure de cadre de carrosserie (6) s'étendant derrière les sièges de l'habitacle (4, 5), qui se compose d'un matériau de forme rigide et est maintenu dans la position montée d'une part au moyen d'un système de fixation (11) agissant par engagement par coopération de forme et d'autre part au moyen d'un système de verrouillage (12), le toit (9) comprenant deux éléments de toit (13, 14) pouvant être assemblés dans un plan longitudinal médian (B-B) du véhicule automobile (1), **caractérisé en ce que** chaque élément de toit (13, 14) coopère exclusivement avec le cadre de pare-brise (3) par le biais d'un premier dispositif de fixation respectif (15) et d'un deuxième dispositif de fixation respectif (16) du système de fixation (11), et exclusivement avec la structure de cadre de carrosserie (6) par le biais d'un dispositif de verrouillage (17) du système de verrouillage (12).

2. Toit amovible selon la revendication 1, **caractérisé en ce que** le premier dispositif de fixation (15) présente une prolongation de toit avant (18) en forme de bride de l'élément de toit (13, 14) du toit (9), s'étendant dans la direction longitudinale du véhicule (A-A), qui, dans l'état monté du toit, vient en prise par le dessous avec une paroi de branche extérieure (19) d'un logement (20) en forme de U ouvert d'une traverse supérieure (24) du cadre de pare-brise (3), orienté vers l'élément de toit (13, 14).

3. Toit amovible selon la revendication 1, **caractérisé en ce que** le deuxième dispositif de fixation (16) comprend au moins un tourillon (26) qui, dans l'état monté du toit, pénètre dans un alésage de réception (27).

4. Toit amovible selon la revendication 3, **caractérisé en ce que** le tourillon (26) est prévu sur l'élément de toit (13, 14) et l'alésage de réception (27) est prévu sur le cadre de pare-brise (3).

5. Toit amovible selon la revendication 4, **caractérisé en ce que** le tourillon (26) présente, à proximité de son extrémité libre (29), une formation de guidage (30) avec un plus grand diamètre (Dg), de laquelle le tourillon (26) se prolonge dans une tige (31) de plus petit diamètre (Dk) et se termine d'autre part sous forme de pointe conique (32).

6. Toit amovible selon la revendication 3, **caractérisé en ce que** le tourillon (26) est maintenu en position par l'intermédiaire d'un dispositif élastique (33) sur l'élément de toit (13, 14).

7. Toit amovible selon la revendication 6, **caractérisé en ce que** le dispositif élastique (33) comprend deux corps élastiques (34, 35) espacés dans la direction transversale du véhicule (D-D), qui sont d'une part maintenus sur une traverse (36) de l'élément de toit (13, 14) et qui sont d'autre part connectés à un support de fixation de type plaque (37) pour le tourillon (26).

8. Toit amovible selon la revendication 7, **caractérisé en ce que** chaque corps élastique (34, 35) repose au moyen d'un tourillon fileté (38) dans un alésage fileté (39) dans un insert (40), par exemple métallique, de l'élément de toit (13, 14).

9. Toit amovible selon la revendication 7, **caractérisé en ce que** le support de fixation (37) est connecté aux corps élastiques (34, 35) par l'intermédiaire de vis (43, 44).

10. Toit amovible selon la revendication 7, **caractérisé en ce que** le tourillon (26) s'étend dans un plan médian longitudinal (E-E) entre les corps élastiques (34, 35) et est connecté au support de fixation (37) par l'intermédiaire d'un tourillon fileté (41) et d'un écrou fileté (42).

11. Toit amovible selon la revendication 7, **caractérisé en ce que** le dispositif élastique (33) est disposé avec les corps élastiques (34 et 35) et le support de fixation (37) au moins de manière essentiellement renfoncée dans un évidement (45) de l'élément de toit (13, 14).

12. Toit amovible selon la revendication 3, **caractérisé en ce que** chaque élément de toit (13 ou 14) présente deux tourillons (26, 26') avec des corps élastiques (34, 35 ; 34', 35'), qui coopèrent avec des alésages de réception correspondants (27 et 27) du cadre de pare-brise (3).

13. Toit amovible selon la revendication 3, **caractérisé en ce que** le tourillon (26, 26'), vu en coupe longitudinale, s'étend suivant un angle aigu (α) par rapport à l'horizontale (46).

14. Toit amovible selon les revendications 2 et 3, **caractérisé en ce que** le tourillon (26) du deuxième dispositif de fixation (16) et la prolongation de toit de type bride (18) du premier dispositif de fixation (15), vus en coupe longitudinale, s'étendent suivant un angle aigu (β) l'un par rapport à l'autre.

15. Toit amovible selon la revendication 2, **caractérisé en ce que** la prolongation de toit (18), vue en coupe longitudinale, est réalisée sous forme d'épaulement par rapport à une paroi extérieure (23) de l'élément de toit (13, 14) s'étendant en affleurement par rapport à la paroi de la branche extérieure (19) du logement (20).

16. Toit amovible selon la revendication 1, **caractérisé en ce que** le dispositif de verrouillage (17) comprend un dispositif d'actionnement (54) avec un tourillon de blocage (55) qui coopère avec une coulisse de fermeture (56).

17. Toit amovible selon la revendication 16, **caractérisé en ce que** le dispositif d'actionnement (54) est fixé sur l'élément de toit (13, 14) et la coulisse de fermeture (56) est fixée sur l'arceau de sécurité (8) de la structure de cadre de la carrosserie.

18. Toit amovible selon la revendication 16, **caractérisé en ce que** le tourillon de blocage (55) est monté sur un bras de manivelle (58) connecté à un arbre pivotant (57), lequel arbre pivotant (57) est connecté à un levier manuel (59).

19. Toit amovible selon la revendication 16, **caractérisé en ce qu'**entre le dispositif d'actionnement (54) et la coulisse de fermeture (56) agit un autre dispositif de fixation (60).

20. Toit amovible selon la revendication 19, **caractérisé en ce que** l'autre dispositif de fixation (60) présente un tourillon vertical (61), qui coopère avec une ouverture de réception (62).

21. Toit amovible selon la revendication 20, **caractérisé en ce que** le tourillon (61) est monté sur le dispositif d'actionnement (54) et l'ouverture de réception (62) est montée sur la coulisse de fermeture (56).

22. Toit amovible selon les revendications 17 et 18, **caractérisé en ce que** le levier manuel (59) est monté dans un évidement (63) de l'élément de toit (13, 14).

23. Toit amovible selon la revendication 22, **caractérisé en ce que** le levier manuel (59) comprend une plaque de commande (64), qui est orientée en affleurement par sa surface avec les parois internes (65, 66) de l'élément de toit (13, 14).

24. Toit amovible selon les revendications 18 et 20, **caractérisé en ce que** le levier manuel (59), l'arbre pivotant (57) et le tourillon (61) sont assemblés par la construction et sont fixés par l'intermédiaire de vis (69, 70) sur l'élément de toit (13, 14).

25. Toit amovible selon les revendications 1 et 17, **caractérisé en ce que** pour chaque élément de toit (13, 14) sont prévus deux dispositifs de fixation (54, 54') qui coopèrent avec des coulisses de fermeture correspondantes (56, 56') sur l'arceau de sécurité (8).

26. Toit amovible selon la revendication 1, **caractérisé en ce que** chaque élément de toit (13, 14) fait saillie avec une prolongation de paroi du toit arrière (71) dans l'état monté au-delà d'une rigole (72) d'un arceau de sécurité (8) de la structure de cadre de carrosserie et est rapproché par l'intermédiaire d'une première portion d'étanchéité (73) et d'une deuxième portion d'étanchéité (74) de la rigole (72) ou de l'arceau de sécurité (8).

27. Toit amovible selon la revendication 1, **caractérisé en ce que** le long du plan médian longitudinal (B-B) du toit (9) l'un des éléments du toit (14) fait saillie avec une première prolongation d'élément de toit latérale (78) au-delà d'une rigole (79) de l'autre élément de toit (13), qui fait également saillie avec une deuxième prolongation d'élément de toit latérale (80) au-delà de la rigole (79), une première portion d'étanchéité (81), une -deuxième portion d'étanchéité (82) et une troisième portion d'étanchéité (83) agissant pour réaliser l'étanchéité des éléments de toit (13, 14) le long du plan médian longitudinal (B-B).

28. Toit amovible selon la revendication 27, **caractérisé en ce que** la première portion d'étanchéité (81) et la troisième portion d'étanchéité (83) sont réalisées sous forme de lèvres d'étanchéité qui coopèrent avec des parois internes (84, 85) de la première prolongation d'élément de toit latérale (78) et de la deuxième prolongation d'élément de toit latérale (80).

29. Toit amovible selon la revendication 27, **caractérisé en ce que** la deuxième portion d'étanchéité (82) s'étend entre les éléments de toit (13, 14) et est réalisée sous forme de corps d'étanchéité ou avec une section transversale circulaire, sur laquelle s'appuient les extrémités (86 et 87) de la première prolongation d'élément de toit latérale (78) et de la deuxième prolongation d'élément de toit latérale (80).

30. Toit amovible selon les revendications 27, 28 et 29, **caractérisé en ce que** les portions d'étanchéité (81, 82, 83) font partie d'un corps d'étanchéité (88) fabriqué d'une seule pièce, qui est maintenu en position dans la rigole (79) de l'autre élément de toit (13).
